# EUROPEAN PATENT SPECIFICATION

(11) **EP 3 260 521 B1**
(45) Date of publication and mention of the grant of the patent: **15.04.2020**
(21) Application number: 17177536.4
(22) Date of filing: 22.06.2017
(51) Int. Cl.: C10J 3/26, C10B 53/02

(54) **GASIFIER WITH IMPROVED AIR INLET ASSEMBLY**
VERGASER MIT VERBESSERTER LUFTEINLASSANORDNUNG
GAZÉIFICATEUR À ENSEMBLE D'ADMISSION D'AIR AMÉLIORÉ

(30) Priority: 22.06.2016 IT UA20165101
(43) Date of publication of application: 27.12.2017
(73) Proprietor: BIOSYN S.r.l., 00178 Roma (IT)
(72) Inventor: LONER, Roberto, 00178 Roma (IT)
(74) Representative: Bosman, Cesare

(56) References cited:
- BE-A6- 1 016 050
- US-A- 5 028 241
- US-A- 5 607 487
- US-A1- 2011 081 290

## Description

The present invention concerns a gasifier with an improved air inlet assembly.

In particular, the invention concerns an air inlet assembly arranged in a median portion of the gasifier, and comprising a double type of air inlet pipe.

A preferred application of the present invention is solid fuel consisting of irregularly sized pieces of wood.

As is known to persons skilled in the art, regularly sized pieces of solid fuel have a direct effect on the uniformity of the passage of the air, of the gases produced and, therefore, of the heat inside the gasifier. This effect occurs in particular in the combustion area with insufficient oxygen, in the oxidisation area and in the fuel drying and pre-heating area.

Irregularly sized pieces of solid fuel, for example waste wood from agriculture, result in the formation of areas with insufficient passage of air and/or gas, in which wood tar forms due to condensation of the components present in the gases produced during the gasification. The presence of said tar has the drawback of necessarily requiring constant plant maintenance.

For some time now, it has been common practice to provide air inlet (usually by suction of the gases) above the oxidization area in order to enlarge said oxidization area. Usually, this air inlet is provided both in a radial direction through openings communicating with an annular pre-heating chamber, and in a vertical direction through openings obtained in a head end of a vertical pipe (lance) arranged in an axial position. The air passing through the lance pre-heats slightly in relation to the speed of passage.

Practice has shown that the horizontal radial openings or, in any case, openings inclined downwards, do not allow penetration and therefore effective action of the air introduced due to the pieces of solid fuel moving slowly down the wall of the gasifier.

Generally, the openings provided at the end of the vertical inlet lance are positioned at a higher level than the radial lateral openings and, therefore, are not sufficient to obtain a wide area for effective passage of the air such as to determine a uniform passage comprising the entire section of the inner layer of the gas generator.

US 2011/081290 discloses a gasifier for organic matter in which a layer of ceramic balls function to both mill clinkers and catalyse hydrogen gas production. The ceramic balls comprise at least one catalyst suitable for lowering the activation energy of the various reactions involved in producing hydrogen gas.

US 5028241 discloses a gasifier system for obtaining relatively clean combustible gaseous products from solid fuel materials, such as processed sewage sludge. The gasifier system comprises a gasifier reactor which communicates a raw, combustible gas to a cyclone separator, a gas scrubbing device and a gas cooling and drying device. Gas which exits the system is relatively clean and may be used in a prime mover for the production of energy. The gasifier reactor is a down-draft fixed bed gasifier. The gasifier is constructed of several interconnected modular units. Moreover, the gasifier is constructed so as to efficiently gasify fuel materials while maintaining excellent horizontal temperature control.

The inventor of the present invention has produced an air inlet assembly such as to prevent the formation of tar inside the gasifier in the peripheral zones of the oxidisation area during the gasification of solid fuels, in particular those having an irregular size and/or containing resins, lymph or phenolic and ethereal substances (creosol, guaiacol and homologues).

The subject of the present invention is a gasifier, the essential characteristics of which are reported in claim 1, and the preferred and/or ancillary characteristics of which are reported in claims 2-7.

An embodiment example is provided below for purely illustrative non-limiting purposes with the aid of the attached figures, in which
Fig. 1 is a longitudinal section of the gasifier according to the present invention;
Fig. 2 is a cross section according to the section line II-II of figure 1 with parts removed; and
Fig. 3 is a lateral view with parts shown transparently of a detail of figure 2.

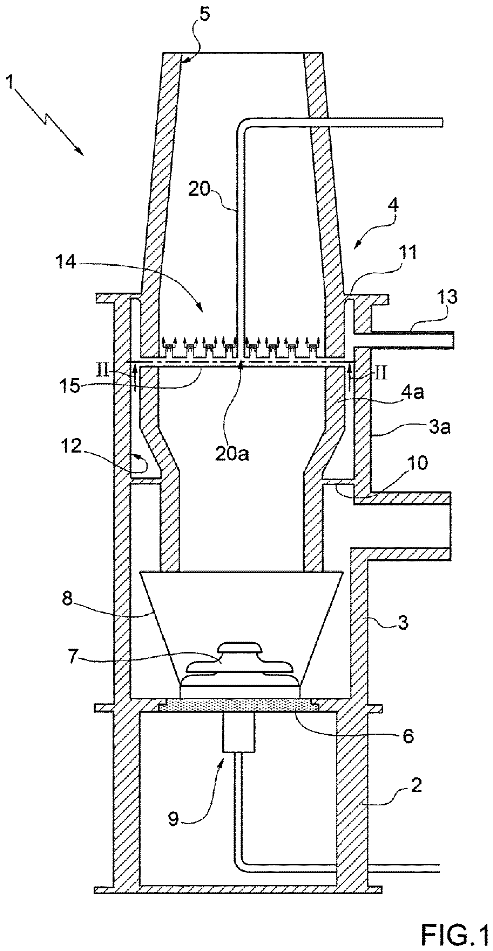

In figure 1, the number 1 indicates overall the gasifier according to the present invention.

The gasifier 1 comprises a base portion 2, an outer layer 3, which rests on said base portion 2, and an inner layer 4 supported by the outer layer 3. The inner layer 4 has a lower portion 4a housed inside the outer layer 3 and an upper portion 4b which projects outside the outer layer 3 and terminates in a loading inlet 5. On the loading inlet, a hopper and a loading apparatus are provided, known and not illustrated and described for the sake of brevity.

The gasifier 1 comprises internally a fixed grid 6, arranged at an upper end of the base portion 2, and a rotating grid 7. The gasifier 1 comprises internally a truncated conical collecting structure 8 arranged below a lower end of the inner layer 4 and in which the rotating grid 7 is housed.

The gasifier 1 comprises a first air inlet assembly 9 known and not described in detail and arranged below the fixed grid 6 and the rotating grid 7.

The inner layer 4 is fixed to the outer layer 3 by means of two radial walls 10 and 11 which delimit, together with a portion 4a of wall of the inner layer 4 and a portion 3a of wall of the outer layer 3 between them, an annular pre-heating chamber 12.

The annular pre-heating chamber 12 communicates with the outside of the gasifier by means of an air inlet duct 13.

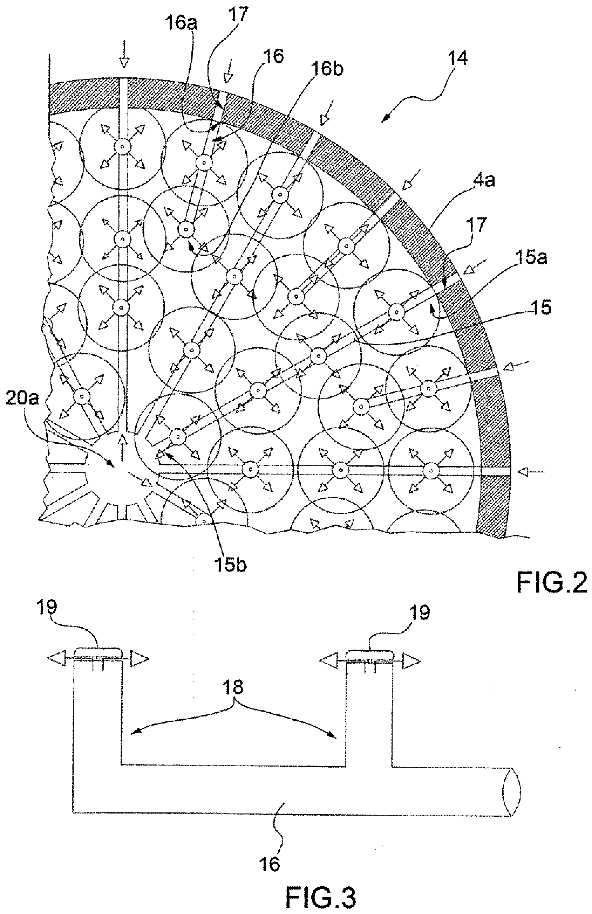

The gasifier 1 comprises a second air inlet assembly 14 arranged above the oxidization area and substantially in a median zone of the inner layer 4. The second air inlet assembly 14 comprises two types of air inlet ducts 15 and 16 extending radially towards the inside from the wall of the inner layer 14. In particular, the two types of air inlet ducts 15 and 16 are arranged on the same plane and, as illustrated in figure 2, in an alternate sequence.

Both types of air inlet ducts 15 and 16 have a first end 15a and 16a connected to the annular pre-heating chamber 12 by means of respective openings 17 obtained on the wall 4a of the inner layer 4.

In particular, the air inlet ducts 16 have a second closed end 16b, while the air inlet ducts 15 have a second end 15b connected to a lower end 20a of a vertical duct 20, which is arranged coaxially with the inner layer 4 and receives the air from the outside of the gasifier at an upper portion of the inner layer 4.

In other words, the air inlet ducts 15 extend in a radial pattern from the lower end 20a of the vertical duct 20 to the wall 4a of the inner layer 4, and are arranged in an alternate manner to the air inlet ducts 16.

Both types of air inlet ducts 15 and 16 comprise a plurality of mushroom-shaped nozzles 18, each of which comprises an upper cap 19, preferably cone shaped, adapted to favour a lateral outflow of the air. Preferably, the lateral outflow of the air occurs at 360°.

Unlike the above description, the two types of air inlet ducts 15 and 16 can also be arranged on two different planes which, however, must have a maximum distance between them equal to the height of the mushroom-shaped nozzles.

Lastly, in the wall of the outer layer 3 a lateral outlet 21 is obtained for outflow of the combustible gases produced during the combustion with insufficient oxygen due to incomplete oxidization of the carbon.

To summarize, while the nozzles 18 relative to the air inlet ducts 16 introduce exclusively air coming from the annular pre-heating chamber 12 and at the pressure present therein, the nozzles 18 relative to the air inlet ducts 15 are connected both to the annular pre-heating chamber 12 and to the vertical duct 20 which supplies external air that mixes with the air coming from the pre-heating chamber in relation to the pressures.

From the above description, the air inlet duct 13 and the vertical duct 20 can introduce air at different pressures. In this regard, the gasifier 1 preferably comprises a pressure/temperature regulation unit for regulating the air, in terms of pressure and/or temperature, introduced through the vertical duct 20 into the air inlet ducts 15, which allows regulation of the air coming out of the nozzles 18 in relation to the operating regime of the gas generator.

The invention does not exclude the known introduction of water, or water vapour, in order to produce "mixed gas" (air gas + water gas); also in this case the above-mentioned arrangement of the nozzles and any differentiated regulation of the latter allows operation of the gas generator adapted to prevent the condensation of tar and/or the formation of waste due to said condensation.

The gasifier according to the present invention guarantees a uniformly distributed introduction of air for the entire horizontal transverse section in the median zone of the inner layer with the effect that the oxidization due to the combustion with insufficient oxygen occurs mainly in this area, thus resulting in an effective vertical extension and an enlargement of the oxidization area. Said extension of the oxidization area, also in the presence of solid fuels in very irregular sized pieces and containing components (resins, lymph, phenolic substances) tending to form tar, entails a uniform diffusion of the reaction heat and, therefore, prevents formation of the condensation of tar.

## Claims

1. A gasifier (1) comprising an outer containment structure (2, 3), an inner layer (4) partially housed in said outer containment structure (2, 3) and arranged to form with part of it (3a) an annular pre-heating chamber (12), a fixed grid (6) arranged below said inner layer (4), a first air inlet assembly (9) arranged below said fixed grid (6) and a second air inlet assembly (14) housed inside said inner layer (4); said second air inlet assembly (14) comprising a first type of air inlet duct (16) extending radially towards the inside from one wall (4a) of said inner layer (4) and having a first end (16a) connected to said annular pre-heating chamber (12) via respective openings (17) and a second closed end (16b); said gasifier (1) being **characterized in that** said second air
inlet assembly comprises a vertical duct (20) and a second type of air inlet duct (15) extending radially towards the inside from one wall (4a) of said inner layer (4) and having a first end (15a) connected to said annular pre-heating chamber (12) via respective openings (17) and a second end (15b) connected to a
lower end (20a) of the vertical duct (20) arranged to receive the air from the outside of said gasifier; said first type of air inlet duct (16) and said second type of air inlet duct (15) being reciprocally arranged in an alternate sequence and comprising a plurality of nozzles (18) for outflow of the air.

2. The gasifier according to claim 1, **characterized in that** said nozzles (18) are of the mushroom type with inlet at 360°.

3. The gasifier according to claim 2, **characterized in that** said nozzles (18) have a cone shaped upper cap (19).

4. The gasifier according to one of the preceding claims, **characterized in that** said first type of air inlet duct (16) and said second type of air inlet duct (15) lie on the same plane.

5. The gasifier according to one of the preceding claims, **characterized in that** it comprises a rotating grid (7) arranged above said fixed grid (6).

6. The gasifier according to one of the preceding claims, **characterized in that** it comprises a pressure/temperature regulation assembly adapted to regulate the pressure and the temperature of the air supplied from said vertical duct (20).

7. The gasifier according to one of the preceding claims, **characterized in that** said vertical duct (20) is arranged in an axial position with respect to said inner layer (4).

## Patentansprüche

1. Vergaser (1), der Folgendes aufweist:
eine äußere Einschließungsstruktur (2, 3),
eine innere Schicht (4), die teilweise in der äußeren Einschließungsstruktur (2, 3) untergebracht und so angeordnet ist, dass sie mit einem Teil davon (3a) eine ringförmige Vorheizkammer (12) bildet,
ein unter der inneren Schicht (4) angeordnetes festes Gitter (6),
eine erste Lufteinlassanordnung (9), die unter dem festen Gitter (6) angeordnet ist, und
eine zweite Lufteinlassanordnung (14), die innerhalb der inneren Schicht (4) untergebracht ist;
wobei die zweite Lufteinlassanordnung (14) eine erste Art von Lufteinlasskanal (16) aufweist, der sich von einer Wand (4a) der Innenschicht (4) radial nach innen erstreckt und ein erstes Ende (16a), das über entsprechende Öffnungen (17) mit der ringförmigen Vorheizkammer (12) verbunden ist, und ein zweites geschlossenes Ende (16b) aufweist;
wobei der Vergaser (1) **dadurch gekennzeichnet ist, dass**
die zweite Lufteinlassanordnung einen vertikalen Kanal (20) und eine zweite Art von Lufteinlasskanal (15) aufweist, welche sich von einer Wand (4a) der Innenschicht (4) radial nach innen erstreckt und ein erstes Ende (15a) aufweist, das über entsprechende Öffnungen (17) mit der ringförmigen Vorwärmkammer (12) verbunden ist, und ein zweites Ende (15b) aufweist, das mit einem unteren Ende (20a) des vertikalen Kanals (20) verbunden ist, der so angeordnet ist, dass er die Luft von außerhalb des Vergasers aufnimmt;
wobei die erste Art von Lufteinlasskanal (16) und die zweite Art von Lufteinlasskanal (15) in einer abwechselnden Reihenfolge hin- und hergehend angeordnet sind und eine Vielzahl von Düsen (18) zum Ausströmen der Luft aufweisen.

2. Der Vergaser nach Anspruch 1, **dadurch gekennzeichnet, dass** die Düsen (18) vom Pilztyp mit einem Einlass bei 360° sind.

3. Der Vergaser nach Anspruch 2, **dadurch gekennzeichnet, dass** die Düsen (18) eine konische obere Kappe (19) haben.

4. Der Vergaser nach einem der vorhergehenden Ansprüche, **dadurch gekennzeichnet, dass** die erste Art von Lufteinlasskanal (16) und die zweite Art von Lufteinlasskanal (15) in derselben Ebene liegen.

5. Der Vergaser nach einem der vorhergehenden Ansprüche, **dadurch gekennzeichnet, dass** er ein rotierendes Gitter (7) aufweist, das über dem festen Gitter (6) angeordnet ist.

6. Der Vergaser nach einem der vorstehenden Ansprüche, **dadurch gekennzeichnet, dass** er eine Druck-/Temperaturregeleinheit aufweist, die geeignet ist, den Druck und die Temperatur der von dem vertikalen Kanal (20) zugeführten Luft zu regeln.

7. Der Vergaser nach einem der vorstehenden Ansprüche, **dadurch gekennzeichnet, dass** der vertikale Kanal (20) in einer axialen Position in Bezug auf die innere Schicht (4) angeordnet ist.

## Revendications

1. Gazéificateur (1) comprenant une structure de confinement externe (2, 3), une couche interne (4) qui est partiellement logée à l'intérieur de ladite structure de confinement externe (2, 3) et qui est agencée de manière à ce qu'elle forme avec une partie de celle-ci (3a) une chambre de préchauffage annulaire (12), une grille fixe (6) qui est agencée au-dessous de ladite couche interne (4), un premier ensemble d'admission d'air (9) qui est agencé au-dessous de ladite grille fixe (6) et un second ensemble d'admission d'air (14) qui est logé à l'intérieur de ladite couche interne (4) ; ledit second ensemble d'admission d'air (14) comprenant un premier type de conduit d'admission d'air (16) qui s'étend radialement en direction de l'intérieur depuis une paroi (4a) de ladite couche interne (4) et qui comporte une première extrémité (16a) qui est connectée à ladite chambre de préchauffage annulaire (12) via des ouvertures respectives (17) et une seconde extrémité fermée (16b) ; ledit gazéificateur (1) étant **caractérisé en ce que** ledit second ensemble d'admission d'air comprend un conduit vertical (20) et un second type de conduit d'admission d'air (15) qui s'étend radialement en direction de l'intérieur depuis une paroi (4a) de ladite couche interne (4) et qui comporte une première extrémité (15a) qui est connectée à ladite chambre de préchauffage annulaire (12) via des ouvertures respectives (17) et une seconde extrémité (15b) qui est connectée à une extrémité inférieure (20a) du conduit vertical (20) qui est agencé pour recevoir l'air en provenance de l'extérieur dudit gazéificateur ; ledit premier type de conduit d'admission d'air (16) et ledit second type de conduit d'admission d'air (15) étant agencés de façon réciproque selon une séquence alternée et comprenant une pluralité d'éjecteurs (18) pour l'écoulement de l'air en sortie.

2. Gazéificateur selon la revendication 1, **caractérisé en ce que** lesdits éjecteurs (18) sont du type champignon avec une admission à 360°.

3. Gazéificateur selon la revendication 2, **caractérisé en ce que** lesdits éjecteurs (18) comportent un capuchon supérieur en forme de cône (19).

4. Gazéificateur selon l'une quelconque des revendications précédentes, **caractérisé en ce que** ledit premier type de conduit d'admission d'air (16) et ledit second type de conduit d'admission d'air (15) sont situés ou reposent sur le même plan.

5. Gazéificateur selon l'une quelconque des revendications précédentes, **caractérisé en ce qu'**il comprend une grille rotative (7) qui est agencée au-dessus de ladite grille fixe (6).

6. Gazéificateur selon l'une quelconque des revendications précédentes, **caractérisé en ce qu'**il comprend un ensemble de régulation de pression/température qui est adapté pour réguler la pression et la température de l'air qui est alimenté depuis ledit conduit vertical (20).

7. Gazéificateur selon l'une quelconque des revendications précédentes, **caractérisé en ce que** ledit conduit vertical (20) est agencé en une position axiale par rapport à ladite couche interne (4).
